# EUROPEAN PATENT SPECIFICATION

(11) **EP 3 860 300 B1**
(45) Date of publication and mention of the grant of the patent: **06.12.2023**
(21) Application number: 19877381.4
(22) Date of filing: 23.10.2019
(51) Int. Cl.: H04W 8/18, H04W 4/08, H04W 4/10

(54) **GROUP CALLING IN A MISSION CRITICAL SERVICE SYSTEM**
GRUPPENRUFE IN EINEM UNTERNEHMENSKRITISCHEN DIENSTSYSTEM
APPEL DE GROUPE DANS UN SYSTÈME DE SERVICE CRITIQUE

(30) Priority: 23.10.2018 CN 201811237437
(43) Date of publication of application: 04.08.2021
(73) Proprietor: Huawei Technologies Co., Ltd., Shenzhen, Guangdong 518129 (CN)
(72) Inventor: GE, Cuili, Shenzhen, Guangdong 518129 (CN); YANG, Yanmei, Shenzhen, Guangdong 518129 (CN)
(74) Representative: Isarpatent
(86) International application number: PCT/CN2019/112862
(87) International publication number: WO 2020/083322

(56) References cited:
- HUAWEI ET AL: "Functional alias call using functional alias ID", 3GPP DRAFT; S6-171206- FUNCTIONAL ALIAS CALL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG6, no. Dubrovnik, Croatia; 20171009 - 20171013 3 October 2017 (2017-10-03), XP051349293, Retrieved from the Internet: URL:http://www.3gpp.org/ftp/Meetings_3GPP_ SYNC/SA6/Docs/ [retrieved on 2017-10-03]
- HUAWEI ET AL: "Functional alias controlling role of MC service server", 3GPP DRAFT; 23280_CR0106R2_(REL-15)_S6-171811 - WAS1756WAS1593 - FUNCTIONAL ALIAS CONTROLLING ROLE OF MC SERVICE SERVER, 3RD GENERATION PARTNERSHIP PROJECT (3GPP), MOBILE COMPETENCE CENTRE ; 650, ROUT , vol. SA WG6, no. Reno, Nevada, USA; 20171127 - 20171201 14 December 2017 (2017-12-14), XP051615839, Retrieved from the Internet: URL:http://www.3gpp.org/ftp/tsg%5Fsa/TSG%5 FSA/TSGS%5F78/Docs/SP%2D170896%2Ezip [retrieved on 2017-12-14]
- HUAWEI ET AL: "Update solution FA1: Call processing to support functional alias(es)", 3GPP DRAFT; S6A170405 - WAS385WAS333WAS231_UPDATE SOLUTION FA1 CALL PROCESSING TO SUPPORT FUNCTIONAL ALIAS, 3RD GENERATION PARTNERSHIP PROJECT (3GPP), MOBILE COMPETENCE CENTRE ; 650, ROUTE DES LUCIOLE , vol. SA WG6, no. Sophia Antipolis, France; 20170904 - 20170907 12 September 2017 (2017-09-12), XP051327037, Retrieved from the Internet: URL:http://www.3gpp.org/ftp/tsg_sa/WG6_Mis sionCritical/Ad-hoc_meetings/2017-09-04_CA PIF_and_FRMCS_adhoc/Docs/ [retrieved on 2017-09-12]
- ZTE TRUNKING ET AL: "Call processing and functional alias(es) resolving", 3GPP DRAFT; S6A170200_CALL PROCESSING AND FUNCTIONAL ALIAS(ES) RESOLVING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. SA WG6, no. Sophia Antipolis, France; 20170904 - 20170907 1 September 2017 (2017-09-01), XP051326154, Retrieved from the Internet: URL:http://www.3gpp.org/ftp/Meetings_3GPP_ SYNC/SA6/Docs/ [retrieved on 2017-09-01]
- TD TECH: "Pseudo-CR on Ad-hoc group call", 3GPP DRAFT; S6-160731 PCR AD HOC GROUP CALL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG6, no. Tenerife - Santa Cruz, Spain; 20160725 - 20160729 24 July 2016 (2016-07-24), XP051131400, Retrieved from the Internet: URL:http://www.3gpp.org/ftp/Meetings_3GPP_ SYNC/SA6/Docs/ [retrieved on 2016-07-24]
- "3rd Generation Partnership Project; Technical Specification Group Services and System Aspects; Functional architecture and information flows to support Mission Critical Push To Talk (MCPTT); Stage 2 (Release 16)", 3GPP STANDARD; TECHNICAL SPECIFICATION; 3GPP TS 23.379, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. V16.0.0, 21 September 2018 (2018-09-21), pages 1-200, XP051487257, [retrieved on 2018-09-21]

## Description

### TECHNICAL FIELD

This invention relates to the communications field, and in particular, to a call method, a communication apparatus, and a computer-readable storage medium.

### BACKGROUND

The 3rd generation partnership project (3rd generation partnership project, 3GPP) standardizes a group of mission critical services based on a 3GPP long term evolution (long term evolution, LTE) system, to support trunking communication in a public safety scenario. The mission critical services may include basic services such as a mission-critical push-to-talk (mission critical push to talk, MCPTT) service, a mission critical data (mission critical data, MCData) service, and a mission critical video (mission critical video, MCVideo) service. Based on these basic services, other applications such as a railway application and an enterprise application can be constructed.

In these applications (for example, the railway application), there is a functional alias (functional alias, FA). The FA may be related to a responsibility of a user or an executable mission of a user. One user may activate one or more FAs at the same time. Because the FA may be related to the responsibility of the user or the executable mission of the user, the FA may be used to page (or call) a user with a specific responsibility or executing a specific mission. However, how to make a call based on the FA needs to be further discussed.

The standard change proposal by HUAWEI ET AL: "Functional alias call using functional alias ID", 3GPP DRAFT; S6-171206- FUNCTIONAL ALIAS CALL, 3RD GENERATION PARTNERSHIP PROJECT (3GPP), MOBILE COMPETENCE CENTRE; 650, ROUTE DES LUCIOLES; F-06921, SOPHIA-ANTIPOLIS CEDEX; FRANCE, vol. SA WG6, no. Dubrovnik, Croatia; 20171009 - 20171013 3 October 2017 (2017-10-03), XP051349293 describes that a MCPTT client 1 sends a functional alias call request towards a MCPTT server. A userat MCPTT client 1 initiates a functional alias (FA) MCPTT call with the called party being a functional alias identified by the functional alias ID, and an active Functional alias ID associated with MCPTT client 1. The MCPTT server checks whether the active functional alias ID associated with MCPTT client 1 is valid. If not cached, the MCPTT server resolves the functional alias ID to get the associated MCPTT ID(s) of the users who activate the functional alias ID. The FA call request may trigger the MCPTT server to subscribe the functional alias status identified by the functional alias ID to the functional alias management server. If successful, the MCPTT server sends the corresponding functional alias call request via a SIP core towards a MCPTT client 2 activating the functional alias ID. The MCPTT user at MCPTT client 2 is notified about the incoming functional alias call, and the functional alias ID of the initiating MCPTT client 1 is displayed. The MCPTT client 2 can accept the functional alias call request, and can return a functional alias call response.

The standard change proposal HUAWEI ET AL: "Functional alias controlling role of MC service server", 3GPP DRAFT; 23280_CR01 06R2JREL-1 5)_S6-1 71811-WAS1756WAS 1593 - FUNCTIONAL ALIAS CONTROLLING ROLE OF MCSERVICE SERVER, 3RD GENERATION PARTNERSHIP PROJECT (3GPP), MOBILE COMPETENCE CENTRE ; 650, ROUT vol. SAWG6, no. Reno, Nevada, USA; 20171 1 27 - 20171 201 14 December 2017 (2017-1 2-14), XP051615839 describes that a MC service server performs the functional alias controlling role for functional alias management including functional alias activation, deactivation and take over. For a single functional alias, only one MC service server is specified as the functional alias controlling role. This document relies, regarding a detailed description of the functional alias controlling role assumed by the MCPTT server, as disclosed in 3GPP TS 23.379[16].

The following two documents, namely a standard change proposal by HUAWEI ET AL: "Update solution FA1 : Call processing to support functional alias(es)", 3GPP DRAFT; S6A1 70405 - WAS385WAS333WAS231.UPDATE SOLUTION FA1 CALL PROCESSING TO SUPPORT FUNCTIONAL ALIAS, 3RD GENERATION PARTNERSHIP PROJECT (3GPP), MOBILE COMPETENCE CENTRE ; 650, ROUTE DES LUCIOLE, vol. SA WG6, no. Sophia Antipolis, France; 201 70904 - 20170907 12 September 2017 (2017-09-1 2), XP051327037 and another standard change proposal by ZTE TRUNKING ET AL: "Call processing and functional alias(es) resolving", 3GPP DRAFT; S6A1 70200.CALL PROCESSING AND FUNCTIONAL ALIAS(ES) RESOLVING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX vol. SA WG6, no. Sophia Antipolis, France; 201 70904 - 20170907 1 September 2017 (2017-09-01 ), XP051326154, both are also relating to call processing using functional aliases. They handle group call setup procedures where a calling client sends a call request, including relevant functional alias, to a MCPTT server/MC Server. The MCPTT server/MC Server triggers a functional alias resolving procedure to obtain a target group ID.

Another standard change proposal by TD TECH: "Pseudo-CR on Ad-hoc group call", 3GPP DRAFT; S6-1 60731 PCR AD HOC GROUP CALL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. SAWG6, no. Tenerife - Santa Cruz, Spain; 201 60725 - 201 60729 24 July 201 6 (2016-07-24), XP051131400 describes a situation in which a client wishes to create an ad-hop group and establishes a group call. A group management server creates the group and informs the MCPTT server about the newly created group. Thus, the group management server notifies the MCPTT server regarding an ad-hoc group creation and its members.

### SUMMARY

Th object of the present invention is to provide a call method, a functional alias controlling server, a group controlling server and computer-readable storage mediums to implement an FA-based call in such a manner that the signalling overhead and call setup time during a functional alias based call can be decreased.

This object is solved by the attached independent claims and further advantageous improvements and embodiments of the invention are listed in the attached dependent claims. In the section below up to the "BRIEF DESCRIPTION OF THE DRAWINGS", details of the present invention and its embodiments are summarized when directly referred to as "invention" and "embodiment", and "disclosure" or "according to the disclosure" refers to details not directly claimed.

### BRIEF DESCRIPTION OF DRAWINGS

FIG. 1 is a simplified schematic diagram of a system architecture according to an embodiment;
FIG. 2 is a schematic composition diagram of a communications apparatus according to an embodiment;
FIG. 3 is a flowchart of a call method according to an embodiment;
FIG. 4 is a flowchart of another call method according to an embodiment;
FIG. 5 is a flowchart of another call method according to an embodiment;
FIG. 6 is a flowchart of still another call method according to an embodiment;
FIG. 7 is a schematic composition diagram of a communications apparatus 70 according to an embodiment;
FIG. 8 is a schematic composition diagram of a communications apparatus 80 according to an embodiment;
FIG. 9 is a schematic composition diagram of a communications apparatus 90 according to an embodiment; and
FIG. 10 is a schematic composition diagram of a communications apparatus 100 according to an embodiment.

### DESCRIPTION OF EMBODIMENTS

First, to facilitate understanding of embodiments, terms in the embodiments are described.

FA: The FA may be referred to as a functional alias or an alias, and is related to a responsibility or an executable mission of a user. One FA may be configured for one or more users. Before using an FA, a user needs to activate the FA. One user can activate one or more alias at the same time. After the user activates the FA, the user may be referred to as an activating user corresponding to the FA.

An FA can be uniquely identified by using information about the FA. The FA can be used for communication with and addressing to a user who activates the FA. That is, the FA can support a routing function. For example, there are two drivers on a train TRAIN29. An FA corresponding to a driver 1 is Driver1_TRAIN29, and an FA corresponding to a driver 2 is Driver2_TRAIN29. After Driver1_TRAIN29 is activated, the driver 1 on the train TRAIN29 can be addressed based on Driver1_TRAIN29. After Driver2_TRAIN29 is activated, the driver 2 on the train TRAIN29 can be addressed based on Driver2_TRAIN29.

In the embodiments, the information about the FA may include a name of the FA or an identifier of the FA. The name of the FA may be any combination of a letter, a Chinese character, a digit, a special character, and the like that are easy for the user to identify, understand, and remember. For example, the name of the FA is a main driver of a train G20. The identifier of the FA may be the name of the FA, or a combination of a digit, a letter, and/or a special character in a specific format. For example, the identifier of the FA may include an international code, a function address, and a function code. The international code is used to indicate a network to which a user subscribes. For example, 086 stands for China and 033 stands for France. The function address includes a call type and a user number. The call type is a prefix, which is used to distinguish between different types of user numbers. For a network, the call type also indicates how to explain a received number, for example, to determine whether the number corresponds to a train number, a control room number, or an engine number. The function code indicates a role associated with the function address. The identifier of the FA can be used for communication with and addressing to a user. For example, the identifier of the FA = the international code + the function address (the call type + the user number) + the function code = 049 + 2 + 0279 + 01. The international code is 049 (where 049 stands for Germany), the call type is 2 (where 2 stands for a train), the user number is 0279 (where 0279 stands for a listed number), and the function code is 01 (where 01 stands for the main driver).

The following describes implementations of the embodiments in detail with reference to the accompanying drawings.

A call method provided in the embodiments may be applied to any system in which an FA and a user corresponding to the FA are managed and configured, for example, may be applied to a mission critical service system (mission critical service system, MC service system). An example in which the call method provided in the embodiments is applied to the mission critical service system is used below for description. For an implementation process in which the call method is applied to another system, refer to descriptions in the embodiments.

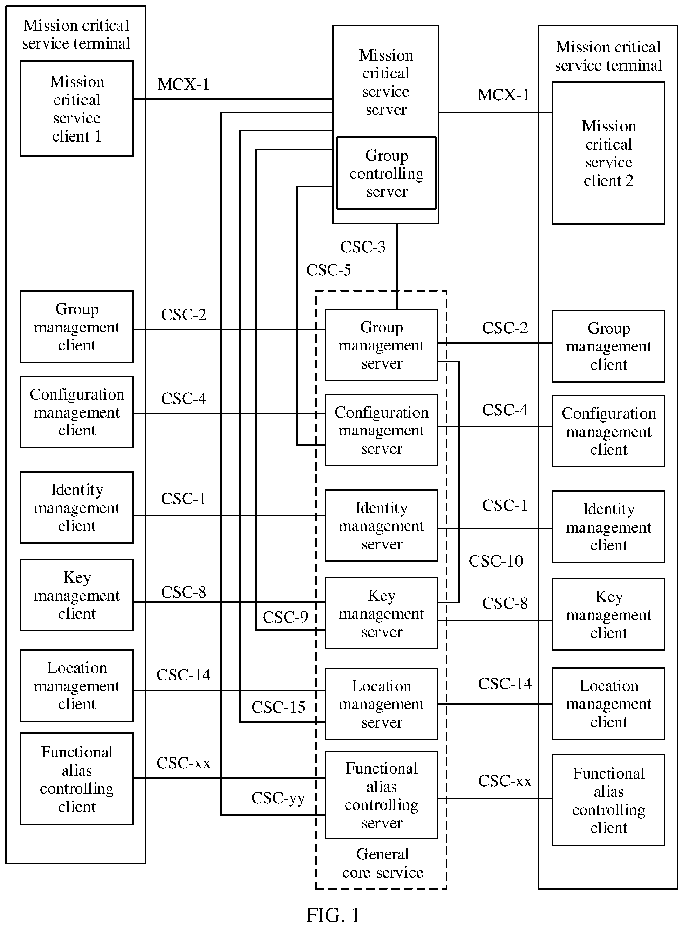

FIG. 1 shows a mission critical service system according to an embodiment. The mission critical service system may call, based on an FA, a user who executes a critical mission. The critical mission may be an MCPTT service, an MCData service, an MCVideo service, a railway application service, or another similar service. This is not limited. As shown in FIG. 1, the system may include a functional alias controlling server, a group controlling server, a plurality of mission critical service terminals, and other functional entities. For example, the system may further include, for example, a group management server (group management server), a configuration management server (configuration management server), an identity management server (identity management server), a key management server (key management server), and a location management server (location management server), and may further include clients deployed in a peer-to-peer manner with the servers. For example, the clients are a group management client (group management client), a configuration management client (configuration management client), an identity management client (identity management client), a key management client (key management client), a location management client (location management client), and a functional alias controlling client (functional-alias controlling client). These clients may be centrally deployed in the mission critical service terminal. In the system shown in FIG. 1, a mission critical service server communicates with a mission critical service client through an MCX-1 interface. The MCX-1 interface corresponds to different services, and may be an MCPTT-1 interface, an MCVideo-1 interface, or an MCData-1 interface. Other servers are connected to peer clients through common service core (common service core, CSC) interfaces. It should be noted that FIG. 1 is an accompanying drawing used as an example. A quantity of functional entities included in the system shown in FIG. 1 is not limited in this embodiment. In addition to the functional entities shown in FIG. 1, the system may further include another functional entity. This is not limited.

The functional alias controlling server is mainly responsible for activating, deactivating, and taking over a functional alias. In a specific implementation, the functional alias controlling server may be independently deployed in the system shown in FIG. 1, or may be integrated into any server such as the mission critical service server (mission critical service server, MC Service Server/MC server), the group management server, the configuration management server, the identity management server, the key management server, and the location management server shown in FIG. 1. In this embodiment, an example in which the functional alias controlling server is independently deployed is used for description. When the functional alias controlling server is independently deployed, the functional alias controlling server may be connected to the mission critical service server through an interface (for example, MCX-3) (not shown in FIG. 1) between application layer servers.

The group controlling server is mainly responsible for call control and media control. In a specific implementation, the group controlling server may be an MCPTT server, an MCVideo server, an MCData server, or the like. The group controlling server may be deployed in the mission critical service server. The mission critical service server has two roles. One is a group service controlling (controlling) function, and is mainly responsible for call setup control, floor arbitration, and media data distribution. The other one is a participating function, and is mainly responsible for user registration management, and signaling and media data routing.

The mission critical service client (mission critical service client, MC Service Client/MC client) is an application layer entity peer to the mission critical service server, and is mainly responsible for processing an application layer transaction, for example, an MCPTT service, an MCData service, an MCVideo service, a railway application service, or another service. The mission critical service client may be included in the mission critical service terminal. For example, the mission critical service client may be a functional entity, a software program, or an application (application, APP) (for example, QQ or WeChat) on the mission critical service terminal. The mission critical service terminal may be a terminal device, for example, a mobile phone, a computer, or a personal assistant, that can execute a critical mission. In a specific implementation, a calling client or a called client described in the embodiments is the mission critical service client in FIG. 1. The calling client is a mission critical service client that initiates a call, and the called client is a mission critical service client that accepts the call. For example, as shown in FIG. 1, if a mission critical service client 1 initiates a call to a mission critical service client 2 by using the mission critical service server, the mission critical service client 1 is the calling client, and the mission critical service client 2 is the called client. On the contrary, if the mission critical service client 2 initiates a call to the mission critical service client 1 by using the mission critical service server, the mission critical service client 2 is the calling client, and the mission critical service client 1 is the called client.

For specific functions of the servers such as the group management server, the configuration management server, the identity management server, the key management server, and the location management server, refer to the conventional technologies. Details are not described again.

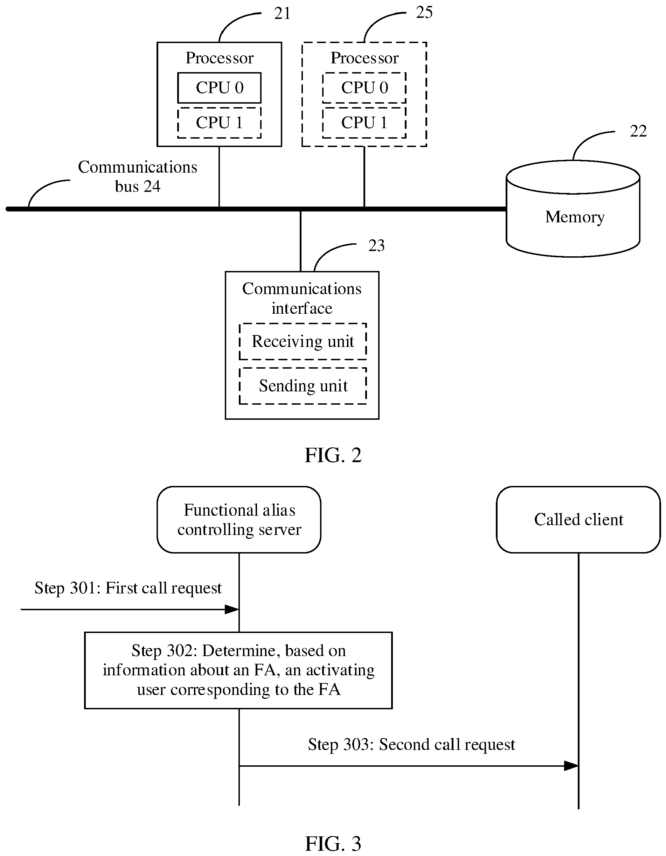

In the system shown in FIG. 1, the functional alias controlling server may receive a call request that includes information about an FA and that is sent by a mission critical client (the calling client), or receive a call request that includes information about an FA and that is sent by a group management controlling server, determine, based on the information about the FA, an activating user corresponding to the FA, and initiate a call to a mission critical client (the called client) used by the activating user. Specifically, for this implementation process, refer to embodiments corresponding to FIG. 3 to FIG. 6.

In a specific implementation, the devices shown in FIG. 1 have components shown in FIG. 2. FIG. 2 is a schematic composition diagram of a communications apparatus according to an embodiment. As shown in FIG. 2, the communications apparatus may include at least one processor 21, a memory 22, a communications interface 23, and a communications bus 24. The following describes each component of the communications apparatus in detail with reference to FIG. 2.

The processor 21 is a control center of the functional alias controlling server, and may be one processor, or may be a general term of a plurality of processing elements. For example, the processor 21 may be a central processing unit (central processing unit, CPU), or an application-specific integrated circuit (application specific integrated circuit, ASIC), or may be configured as one or more integrated circuits implementing the embodiments, for example, one or more digital signal processors (digital signal processor, DSP), or one or more field programmable gate arrays (field programmable gate array, FPGA).

The processor 21 may perform various functions of the functional alias controlling server by running or executing a software program stored in the memory 22 and invoking data stored in the memory 22.

In a specific implementation, in an embodiment, the processor 21 may include one or more CPUs, for example, a CPU 0 and a CPU 1 that are shown in FIG. 2.

In a specific implementation, in an embodiment, the functional alias controlling server may include a plurality of processors such as the processor 21 and a processor 25 shown in FIG. 2. Each of the processors may be a single-core processor (single-CPU) or may be a multi-core processor (multi-CPU). The processor herein may refer to one or more devices, circuits, and/or processing cores configured to process data (for example, computer program instructions).

The memory 22 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage medium, optical disc storage medium (including a compact disc, a laser disc, an optical disc, a digital versatile disc, a Blu-ray disc, or the like), and magnetic disk storage medium, another magnetic storage device, or any other medium that can be configured to carry or store expected program code in a form of instructions or a data structure and that is accessible by a computer, but is not limited thereto. The memory 22 may exist independently, and is connected to the processor 21 through the communications bus 24. Alternatively, the memory 22 may be integrated into the processor 21.

The memory 22 is configured to store a software program for performing the solutions, and the processor 21 controls the execution.

The communications interface 23 is configured to communicate with another device or a communications network, such as the Ethernet, a radio access network (radio access network, RAN), or a wireless local area network (wireless local area networks, WLAN) through any apparatus such as a transceiver. The communications interface 23 may include a receiving unit for implementing a receiving function and a sending unit for implementing a sending function.

The communications bus 24 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

In addition, a structure of the device shown in FIG. 2 does not constitute a limitation on the communications apparatus. In addition to the components shown in FIG. 2, the communications apparatus may include more or fewer components than those shown in the figure, or combine some components, or have different component arrangements.

The following describes, with reference to the system shown in FIG. 1, the call method provided in the embodiments. Each communications apparatus mentioned in the following method embodiments may have the components shown in FIG. 2, and details are not described again.

FIG. 3 is a flowchart of a call method according to an embodiment. As shown in FIG. 3, the method includes the following steps.

Step 301: According to the invention, a functional alias controlling server receives a first call request.

The functional alias controlling server may be the functional alias controlling server in FIG. 1.

The first call request may include information about an FA that a calling client requests to call, and the calling client may be any mission critical service client that initiates a call in FIG. 1. The first call request may be used to request to call (calling) a user corresponding to the FA. Alternatively, it may be described as that, for example, the first call request may be used to request to page a user corresponding to the FA, or may be described as that the first call request is used to invite a user corresponding to the FA to join a call. The user corresponding to the FA may be a user who activates the FA or an activating user corresponding to the FA.

For example, the first call request may be a message of a type such as an SMS message or an application message.

In addition, in addition to the information about the FA, the first call request may further include other information, for example, information about a calling user or a call type. The calling user may be a user using the calling client, and the information about the calling user may be used to identify the calling user. For example, the information about the calling user may be any combination of a letter, a digit, and/or a special character uniquely identifying the calling user. For example, the identifier of the calling user is MC service ID, MCPTT ID, MCVideo ID, or MCData ID.

The call type may be an FA-based single call, an FA-based group call, or a group call. The FA-based single call may refer to calling only one user corresponding to the FA. The FA-based group call may refer to calling users corresponding to a group including the FA. The group call may refer to calling a group. Different from the FA-based group call, the group call does not limit content included in the group.

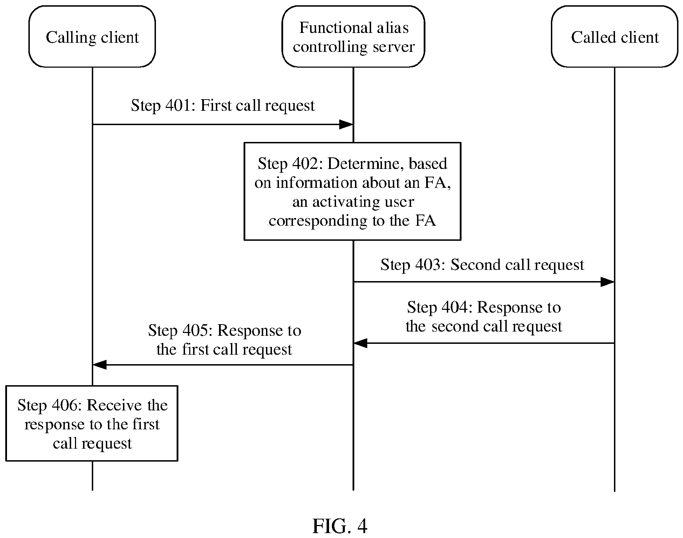

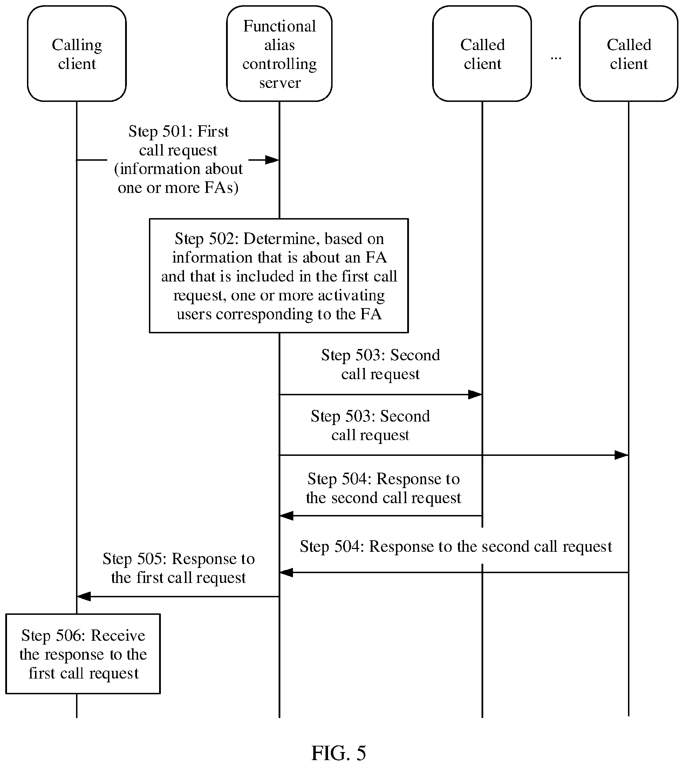

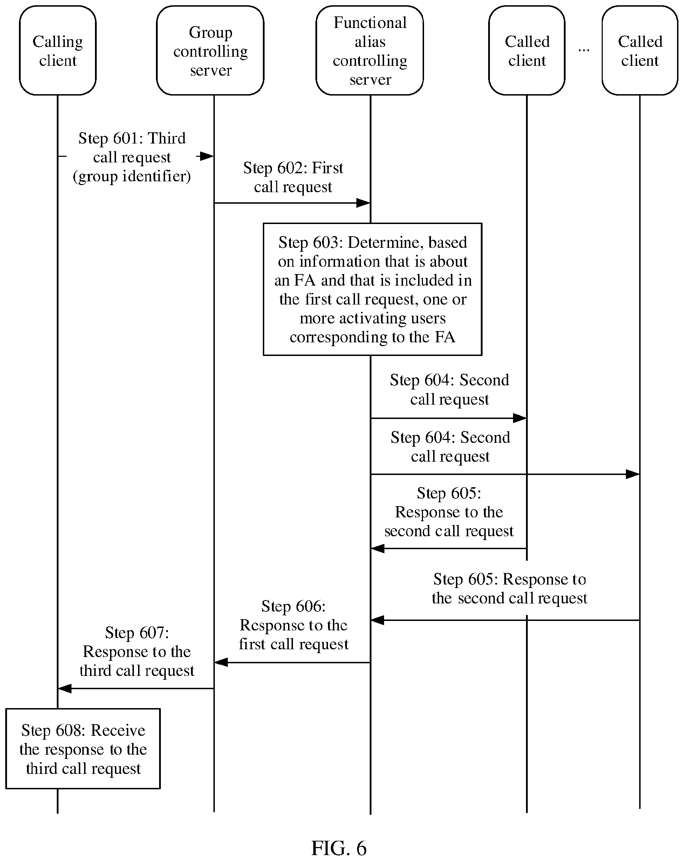

According to the invention, in step 301, the functional alias controlling server receives the first call request from the calling client, as described in an embodiment corresponding to FIG. 4 or FIG. 5. The functional alias controlling server may alternatively receive the first call request from a group controlling server, as described in an embodiment corresponding to FIG. 6.

Step 302: According to the invention, the functional alias controlling server determines, based on the information about the FA, the activating user corresponding to the FA.

The functional alias controlling server may dynamically maintain a correspondence list between an FA and a user who activates the FA. The correspondence list includes a plurality of records. Each record includes an FA and an activating user corresponding to the FA, and the activating user corresponding to the FA may be one or more users. Alternatively, each record includes a user and an FA activated by the user, and the FA activated by the user may be one or more FAs. The functional alias controlling server may dynamically maintain the correspondence list depending on whether the user activates the FA. For example, when the user newly activates an FA, the functional alias controlling server may add the FA newly activated by the user to an activated FA entry that is of the user and that is in the correspondence list. For another example, when a new user activates an FA, or when a user newly activates an FA, information about the user is added to an activating user entry that is of the FA and that is in the correspondence list.

That the functional alias controlling server determines, based on the information about the FA, the activating user corresponding to the FA may include: The functional alias controlling server searches the correspondence list by using the information about the FA as an index, and finds, from the correspondence list, the activating user corresponding to the FA requested by the calling client. There may be zero, one, or more activating users corresponding to the FA.

For example, the following Table 1 is the correspondence list dynamically maintained by the functional alias controlling server. In the correspondence list, activating users corresponding to an FA 1 are: a user 1, a user 2, and a user 3, activating users corresponding to an FA 2 are: the user 2, a user 4, and a user 5, and an activating user corresponding to an FA 3 is the user 3. When the functional alias controlling server receives the first call request including the FA 1, the functional alias controlling server may search Table 1, to determine that the activating users corresponding to the FA 1 are the user 1, the user 2, and the user 3. When the functional alias controlling server receives the first call request including the FA 3, the functional alias controlling server may search Table 1, to determine that the activating user corresponding to the FA 3 is the user 3.

**Table 1**

| FA | Activating user |
|---|---|
| FA 1 | User 1, user 2, and user 3 |
| FA 2 | User 2, user 4, and user 5 |
| FA 3 | User 3 |

As described above, the functional alias controlling server may determine, based on the information about the FA and the correspondence between the FA and the user who activates the FA, one activating user or a plurality of (two or more) activating users corresponding to the FA. This is not limited.

It should be noted that, when the call type included in the first call request is the FA-based single call and the functional alias controlling server determines a plurality of activating users based on the information about the FA, the functional alias controlling server may select, according to a preset selection policy, one activating user from the plurality of activating users corresponding to the FA, as the activating user corresponding to the FA. For example, if the call type is an FA 1-based single call, and the activating users corresponding to the FA 1 are the user 1, the user 2, and the user 3, the functional alias controlling server may select the user 1 from the user 1, the user 2, and the user 3 according to the preset selection policy, and initiate a call to the user 1.

When the call type included in the first call request is the FA-based group call, and the functional alias controlling server determines a plurality of activating users based on the information about the FA, the functional alias controlling server may initiate a call to all the determined activating users, or may select, according to the preset selection policy, some activating users from the plurality of activating users corresponding to the FA, and initiate a call to the some activating users. For example, the activating users correspond to the FA 1 are: the user 1, the user 2, and the user 3. The functional alias controlling server may select, according to the preset selection policy, the user 1 and the user 2 from the user 1, the user 2, and the user 3, and initiate a call to the user 1 and the user 2.

The preset selection policy may be preconfigured for the functional alias controlling server, or may be obtained by the functional alias controlling server from another network device. This is not limited. The preset selection policy may be used to specify that the functional alias controlling server selects the activating user corresponding to the FA, based on one or more types of the following information: a time for activating the FA by the user, and a priority of the user. Using the FA-based single call as an example, the functional alias controlling server may use a user who first activates the FA as the activating user corresponding to the FA, use a user with a highest priority as the activating user corresponding to the FA, or use a user with a highest priority among a plurality of users who first activate the FA as the activating user corresponding to the FA.

Step 303: According to the invention, the functional alias controlling server sends a second call request to a called client.

The called client may be a mission critical service client that is used by the activating user corresponding to the FA and that is in the system shown in FIG. 1.

The second call request may be an SMS message, an application message, or the like. The second call request may be used to request to call the activating user, and the second call request may include information about the activating user. The information about the activating user may be used to identify the user who activates the FA. For example, the information about the activating user may be any combination of a letter, a digit, and/or a special character uniquely identifying the user who activates the FA. For example, the identifier of the calling user is MC service ID, MCPTT ID, MCVideo ID, or MCData ID.

In addition to the information about the activating user, the second call request may further include the information about the FA that the calling client requests to call, other information, and the like. This is not limited.

Step 303 is described by using an example in which the functional alias controlling server sends the second call request to only one called client. It should be noted that, in this embodiment, when one activating user corresponding to an FA may use one client, if the FA corresponds to a plurality of activating users, the functional alias controlling server may send the second call request to a plurality of called clients. For example, if the activating users corresponding to the FA 1 are the user 1, the user 2, and the user 3, the functional alias controlling server may send the second call request to a client used by the user 1, send the second call request to a client used by the user 2, and send the second call request to a client used by the user 3. For a process in which the functional alias controlling server sends the second call request to the plurality of (two or more) called clients, refer to step 303, and details are not described again. Alternatively, if the first call request includes information about a plurality of FAs, the functional alias controlling server may perform the process shown in FIG. 3 for each FA.

Further, after receiving the second call request, the called client may send a response to the second call request to the functional alias controlling server. Correspondingly, the method may further include: The functional alias controlling server receives the response to the second call request from the called client; and the functional alias controlling server sends a response to the first call request based on the response to the second call request.

For example, when the first call request is from the calling client, the functional alias controlling server may send the response to the first call request to the calling client. Specifically, for a process in which the functional alias controlling server sends the response to the first call request to the calling client, refer to descriptions in the embodiment corresponding to FIG. 4 or FIG. 5. When the first call request is from the group controlling server, the functional alias controlling server may send the response to the first call request to the group controlling server. Specifically, for a process in which the functional alias controlling server sends the response to the first call request to the group controlling server, refer to descriptions in the embodiment corresponding to FIG. 6.

The response to the second call request may be used to indicate, to the functional alias controlling server, that the activating user corresponding to the FA is successfully called. The response to the second call request may include the information about the FA, and may further include the information about the activating user and other information, for example, an identifier of the called client. Correspondingly, the response to the first call request may be used to indicate that the activating user corresponding to the FA is successfully called. The response to the first call request may include the information about the FA, and may further include the information about the activating user corresponding to the FA and other information, for example, the identifier of the called client. In the embodiments, the identifier of the called client may be used to identify the called client, and the identifier of the called client may be an application layer user identifier.

It should be noted that, when the functional alias controlling server sends the second call request to a plurality of called clients, the response that is to the second call request and that is received by the functional alias controlling server may include information about an FA corresponding to one or more activating users who are successfully called, and may further include information about the one or more activating users who are successfully called and other information, for example, identifiers of the one or more called clients. In the embodiments, the successfully called activating user may be an activating user corresponding to the called client that sends the response to the second call request to the functional alias controlling server. For example, if the functional alias controlling server receives the response to the second call request, where the response is sent by a called client, the functional alias controlling server determines that an activating user using the called client is successfully called.

In the embodiments, before the called client sends the response to the second call request to the functional alias controlling server, the method may further include: The called client determines that the activating user accepts a call initiated by the functional alias controlling server.

On the contrary, when the called client determines that the activating user does not accept a call initiated by the functional alias controlling server, the method further includes: The called client sends a reject message to the functional alias controlling server, where the reject message is used to indicate to reject the call from the functional alias controlling server.

For a process in which the called client determines that the activating user accepts (or does not accept) the call initiated by the functional alias controlling server, refer to the descriptions in the embodiment corresponding to FIG. 4.

Based on the call method shown in FIG. 3, the functional alias controlling server may receive a call request that includes information about an FA, determine, based on the information about the FA, an activating user corresponding to the FA, and send the call request to all clients used by the activating user, to call the activating user. In this way, the user may be called based on the FA. In addition, the functional alias controlling server directly determines the activating user corresponding to the FA and initiates the call, so that signaling overheads caused when the functional alias controlling server exchange information with another network element to learn of the activating user corresponding to the FA are avoided, and a call setup delay is reduced.

The following describes the method shown in FIG. 3 in detail with reference to FIG. 4 to FIG. 6.

FIG. 4 is a flowchart of a call method according to an embodiment, to implement an FA-based single call, namely, call only one activating user corresponding to the FA. As shown in FIG. 4, the method may include the following steps.

Step 401: According to the invention, a calling client sends a first call request to a functional alias controlling server.

For related descriptions of the first call request, refer to the descriptions in the embodiment corresponding to FIG. 3. Details are not described again.

It should be noted that a call type included in the first call request in step 401 is an FA-based single call, and may be used to indicate the functional alias controlling server to call only one user.

For example, when a calling user using the calling client determines to execute each critical mission, the calling user may tap a selection button on a human-computer interaction interface, to select the critical mission. After receiving a selection result of the calling user, the calling client includes information about an FA related to the critical mission in the first call request, and sends the first call request to the functional alias controlling server. Further, the calling user may further select the call type as the single call by using the selection button on the human-computer interaction interface. After receiving the selection result of the calling user, the calling client includes the call type in the first call request, and sends the first call request to the functional alias controlling server.

The human-computer interaction interface may be a touch display screen on a mission critical service terminal in which the calling client is located, and the mission critical service terminal may display corresponding content on the human-computer interaction interface based on an input operation of a user. In step 401, the human-computer interaction interface displays a plurality of critical missions (for example, calling a driver on G20 and calling a train conductor on G20). Each critical mission corresponds to a selection button. Further, the human-computer interaction interface may further display a plurality of call types, for example, an FA-based single call and an FA-based group call. Each call type corresponds to a selection button. For example, the driver on G20 corresponds to an FA 1. When the calling user determines to make a single call to the driver on G20, the calling user may tap a selection button corresponding to calling the driver on G20, and tap a selection button corresponding to the FA-based single call. After receiving the selection result of the calling user, the calling client sends a call request including the FA 1 and the call type which is the FA-based single call.

Alternatively, a critical mission displayed on the human-computer interaction interface may be an FA corresponding to the critical mission, and the calling user may tap a selection button corresponding to the FA, to select the FA.

Step 402: According to the invention, the functional alias controlling server receives the first call request, and determines, based on the information that is about the FA and that is included in the first call request, an activating user corresponding to the FA.

For example, the functional alias controlling server may first determine one or more activating users corresponding to an FA by searching a correspondence list between the FA and a user who activates the FA, then select one activating user from the one or more activating users according to a preset selection policy, and initiate a call to the selected activating user. It should be noted that, when it is determined, by searching the correspondence list between the FA and the user who activates the FA, that the FA corresponds to one activating user, the activating user may be directly used as a call object without being selected according to the preset selection policy, and a call is initiated to the activating user.

For related descriptions of the preset selection policy, refer to descriptions in step 302. Details are not described again.

Step 403: According to the invention, the functional alias controlling server sends a second call request to a called client.

For related descriptions of the first call request and a specific implementation of step 403, refer to step 303. Details are not described again.

Step 404: The called client receives the second call request, and sends a response to the second call request to the functional alias controlling server.

The response to the second call request may include the information about the FA, and may further include information about the activating user and other information, for example, an identifier of the called client. The response to the second call request may be used to indicate, to the functional alias controlling server, that the activating user corresponding to the FA is successfully called.

To improve user experience, before the called client receives the second call request, the called client determines whether the activating user accepts the call initiated by the functional alias controlling server, and if the activating user accepts the call initiated by the functional alias controlling server, the called client performs step 404. Otherwise, the called client sends a reject message to the functional alias controlling server, where the reject message is used to indicate to reject the call from the functional alias controlling server.

For example, the called client determines that the activating user accepts the call initiated by the functional alias controlling server may include: The called client may send a prompt message to the activating user, and if receiving a confirmation message sent by the activating user, the called client determines that the activating user accepts the call from the functional alias controlling server; otherwise, the called client does not accept the call initiated by the functional alias controlling server.

The called client may send a prompt to the activating user through the human-computer interaction interface. The prompt message may include the information about the FA that the calling client requests to call, and the prompt message may be used to prompt the activating user that the call is made based on the FA. The confirmation message may be a message sent by the activating user by tapping a confirmation button on the human-computer interaction interface. The confirmation message may be used to indicate to accept the call initiated by the functional alias controlling server, that is, use the FA sent by the functional alias controlling server. For example, if a responsibility exercised or a mission executed by the activating user is related to the FA, the activating user sends a confirmation message to the called client; otherwise, the activating user does not send the confirmation message to the called client.

Step 405: The functional alias controlling server receives the response to the second call request, and sends a response to the first call request to the calling client.

The response to the first call request may include the information about the FA, and may further include the information about the activating user corresponding to the FA and other information, for example, the identifier of the called client. The response to the first call request may be used to indicate, to the calling client, that the activating user corresponding to the FA is successfully called.

Step 406: The calling client receives the response to the first call request.

At this point, a media plane and a floor control plane between the calling client and the called client are set up, and floor control and media transmission may be performed.

Optionally, in the embodiment shown in FIG. 4, to verify whether the calling user has a call right, before step 402, the method may further include: The functional alias controlling server performs an authorization check on the calling user. If the check succeeds, the functional alias controlling server performs step 402; otherwise, the functional alias controlling server does not perform step 402 to step 406. The functional alias controlling server sends a call rejection message to the calling client, to reject the call request sent by the calling client.

For example, that the functional alias controlling server performs the authorization check on the calling user may include: The functional alias controlling server obtains alias call right related information based on information about the calling user, and determines, based on the alias call right related information, whether the calling user has a right to request to call the FA. The alias call right related information may be subscription information of the calling user, and may also be policy information locally stored in the functional alias controlling server.

In a possible implementation, the functional alias controlling server obtains the subscription information of the calling user based on the information about the calling user, where the subscription information of the calling user includes indication information, and the indication information is used to indicate whether the calling user has the call right. The functional alias controlling server may determine, based on the subscription information of the calling user, whether the calling user has the call right. When the indication information included in the subscription information is used to indicate that the calling user has the call right, the functional alias controlling server may determine that the calling user has the call right. Alternatively, when the indication information included in the subscription information is used to indicate that the calling user does not have the right to call the FA, the functional alias controlling server may determine that the calling user does not have the call right. For example, in the subscription information, one bit may be used to indicate whether the calling user has the call right. For example, "1" indicates that the calling user has the right to call the FA, and "0" indicates that the calling user does not have the call right. In addition, the subscription information may not only indicate whether the calling user has the call right, but also indicate specific FAs that the calling user has the right to call, when the calling user has the call right. For example, in the subscription information, only "1" is used to indicate that the calling user has the call right, and in this case, it may implicitly indicate that the calling user has the call right to all FAs. For another example, the subscription information only includes a list of FAs activated by the calling user. In this case, it indicates that the calling user has the call right, and has the call right only to an FA in the FA list.

In another possible implementation, the functional alias controlling server may obtain the locally stored policy information. The policy information includes information about one or more users having the call right. The functional alias controlling server may determine whether the calling user has the call right by determining whether the information that is about the calling user and that is included in the first call request is included in the policy information. When the information about the calling user is included in the policy information, it is determined that the calling user has the call right; or when the information about the calling user is not included in the policy information, it is determined that the calling user does not have the call right.

For example, the policy information may include only information about users to indicate specific users who have call rights. Definitely, the policy information may further indicate specific users who have call rights to specific FAs. For example, the policy information includes only an information list of users having call rights, and in this case, it may implicitly indicate that these users have the call rights to all FAs. For another example, the policy information includes an FA list and an information list of corresponding users having call rights, to indicate that these users have the call rights only to the FAs in the FA list.

It should be noted that, in this embodiment, the authorization check may be performed on the calling user based on both the subscription information of the calling user and the policy information locally stored in the functional alias controlling server.

Based on the call method shown in FIG. 4, the functional alias controlling server may receive a call request that is from the called client and that includes information about an FA, determine, based on the information about the FA, an activating user corresponding to the FA, and send the call request to all clients used by the activating user, to call the activating user. In this way, the user may be called based on the FA. In addition, the functional alias controlling server directly determines the activating user corresponding to the FA and initiates the call, so that signaling overheads caused when the functional alias controlling server exchanges information with another network element to learn of the activating user corresponding to the FA are avoided, and a call setup delay is reduced.

The embodiment shown in FIG. 4 is described by using an example in which the calling client requests to call only one FA. It may be understood that, to improve a call capability of the calling client, the calling client may alternatively request to call, at the same time, users corresponding to a plurality of FAs. For a manner in which the calling client requests, at the same time, to call the users corresponding to the plurality of FAs, refer to an embodiment corresponding to FIG. 5. Alternatively, the calling client requests to call users corresponding to a plurality of FAs included in a group. For a manner in which the calling client requests to call the users corresponding to the FAs included in the group, refer to an embodiment corresponding to FIG. 6.

FIG. 5 is a flowchart of a call method according to an embodiment, to call activating users corresponding to one or more FAs. As shown in FIG. 5, the method includes the following steps.

Step 501: According to the invention, a calling client sends a first call request to a functional alias controlling server.

The first call request includes information about one or more FAs. For the information about the FAs, refer to the foregoing descriptions.

It should be noted that, in step 501, the first call request is used to call activating users corresponding to further includes FAs, the first call request a call type, the call type indicates an FA group call, and the functional alias controlling server calls all activating users corresponding to the FAs.

For example, when a calling user using the calling client determines to execute one or more critical missions, the calling user may tap a selection button on a human-computer interaction interface, to select one or more critical missions. After receiving a selection result of the calling user, the calling client includes information about an FA related to each critical mission in the first call request, and sends the first call request to the functional alias controlling server. Further, the calling user may select the call type as the FA group call by using the selection button on the human-computer interaction interface. After receiving the selection result of the calling user, the calling client includes the call type in the first call request, and sends the first call request to the functional alias controlling server.

The human-computer interaction interface may be a touch display screen on a mission critical service terminal in which the calling client is located, and the mission critical service terminal may display corresponding content on the human-computer interaction interface based on an input operation of a user. In step 501, the human-computer interaction interface displays a plurality of critical missions (for example, calling a driver on G20 and calling a train conductor on G20). Each critical mission corresponds to a selection button. Further, the human-computer interface may further display a plurality of call types, for example, an FA-based single call, an FA-based group call, and an FA group call. Each call type corresponds to a selection button. For example, the driver on G20 corresponds to an FA 1, and the train conductor on G20 corresponds to an FA 2. When the calling user determines to call the driver on G20 and the train conductor on G20, the calling user may tap a selection button corresponding to calling the driver on G20 and a selection button corresponding to calling the train conductor on G20, and tap a selection button corresponding to the FA group call. After receiving the selection result of the calling user, the calling client sends a call request including the FA 1, the FA 2, and the call type which is the FA group call.

Alternatively, a critical mission displayed on the human-computer interaction interface in step 501 may be an FA corresponding to the critical mission, and the calling user may tap a selection button corresponding to the FA, to select the FA.

Step 502: According to the invention, the functional alias controlling server receives the first call request, and determines, based on the information that is about the FA and that is included in the first call request, one or more activating users corresponding to the FA.

The functional alias controlling server may determine the one or more activating users corresponding to the FA in the manner described in step 302.

Step 502 is described by using an example in which the first call request includes information about only one FA. It should be noted that, when the first call request includes a plurality of FAs, the functional alias controlling server performs the process described in step 502 for each FA, to determine one or more activating users corresponding to each FA.

Step 503: According to the invention, the functional alias controlling server sends a second call request to a called client.

The called client in step 503 is a client used by the activating user corresponding to the FA. For related descriptions of the second call request and a specific implementation in which the functional alias controlling server sends the second call request to the called client, refer to step 303. Details are not described again.

Step 503 is described by using an example in which the activating user corresponding to the FA uses only one called client. It should be noted that, when the FA corresponds to a plurality of activating users, and the plurality of activating users use a plurality of called clients, the functional alias controlling server sends the second call request to the plurality of called clients separately.

Step 504: The called client receives the second call request, and sends a response to the second call request to the functional alias controlling server.

For related descriptions of the response to the second call request and an implementation process of step 504, refer to the descriptions in step 404. Details are not described again.

Step 504 is described by using an example in which only one called client sends the response to the second call request to the functional alias controlling server. It should be noted that, when the functional alias controlling server sends the second call request to a plurality of called clients separately, each of the plurality of called clients may perform the process in step 504, and send the response to the second call request to the functional alias controlling server.

Step 505: The functional alias controlling server receives the response to the second call request, where the response to the second call request is sent by the called client, and sends a response to the first call request to the calling client.

The response to the first call request may include the information about the FA, and may further include information about the activating user and other information, for example, an identifier of the called client. For a specific implementation process of step 505, refer to the descriptions in step 405. Details are not described again.

Step 505 is described by using an example in which the functional alias controlling server receives the response to the second call request, where the response is sent by only one called client, and sends the response to the first call request to the calling client. It should be noted that, when the functional alias controlling server sends the second call request to a plurality of called clients separately, the functional alias controlling server may receive the responses to the second call request, where the responses are sent by the plurality of called clients, and send the response to the first call request to the calling client, where the response to the first call request includes information about a plurality of FAs corresponding to a plurality of activating users who are successfully called. The response to the first call request may further include information about a plurality of activating users who are successfully called and other information, for example, identifiers of the plurality of called clients.

For example, a call request sent by the calling client includes an FA 1 to an FA 5, and the FA 1 corresponds to an activating user 1, the FE12 corresponds to an activating user 2, the FA 3 corresponds to an activating user 3, the FA 4 corresponds to an activating user 4, and the FA 5 corresponds to an activating user 5. The functional alias controlling server sends a call request to a called client 1 used by the activating user 1, the functional alias controlling server sends a call request to a called client 2 used by the activating user 2, the functional alias controlling server sends a call request to a called client 3 used by the activating user 3, the functional alias controlling server sends a call request to a called client 4 used by the activating user 4, and the functional alias controlling server sends a call request to a called client 5 used by the activating user 5. If the functional alias controlling server receives responses, to the call requests, that are sent by only the called client 1, the called client 3, and the called client 5, the functional alias controlling server determines that the user 1, the user 3, and the user 5 are activated. In this way, the functional alias controlling server may include information about the FA 1, the FA 3, and the FA 5 in the responses to the call requests and send the responses to the called client, or may include information about the user 1, the user 3, and the user 5 in the responses to the call requests and send the responses to the called client, so that the calling client learns that the users corresponding to the FA 1, the FA 3, and the FA 5 are successfully called.

Step 506: The calling client receives the response to the first call request.

At this point, a media plane and a floor control plane between the calling client and the one or more called clients are set up, and floor control and media transmission may be performed.

Optionally, in the embodiment shown in FIG. 5, to verify whether the calling user has a call right, before step 502, the method may further include: The functional alias controlling server performs an authorization check on the calling user. For a process in which the functional alias controlling server performs the authorization check on the calling user, refer to the descriptions in the embodiment corresponding to FIG. 4. Details are not described again.

Based on the call method shown in FIG. 5, the functional alias controlling server may receive a call request that is from the called client and that includes information about one or more FAs, determine, based on the information about the one or more FAs, activating users corresponding to the one or more FAs, and send the call request to all clients used by the activating users corresponding to the one or more FAs, to call the activating users. In this way, the plurality of users may be called based on the plurality of FAs. In addition, the functional alias controlling server directly determines the activating users corresponding to the one or more FAs and initiates the call, so that signaling overheads caused when the functional alias controlling server exchanges information with another network element to learn of the activating users corresponding to the FAs are avoided, and a call setup delay is reduced.

FIG. 6 is another call method according to an embodiment, to implement a group-based call. As shown in FIG. 6, the method includes the following steps.

Step 601: According to the invention, a calling client sends a third call request to a group controlling server.

The calling client may be any client that initiates a call in FIG. 1, and the group controlling server may be the group controlling server in FIG. 1.

The third call request may include a group identifier. The group identifier may be used to uniquely indicate a group, and a group indicated by the group identifier includes a group (one or more) of FAs. It may be understood that members of the group are users corresponding to the group of FAs, and a quantity of the users and specific users are uncertain, that is, a quantity of the members in the group is uncertain.

In addition, in addition to the group identifier, the third call request may further include either or both of information about a calling user and a call type. As described above, the calling user may be a user using the calling client, and the call type included in the third call request may be used to indicate that a current call is a group call.

For example, when the calling user using the calling client determines to call a group, the calling user may tap a selection button on a human-computer interaction interface, to select the group. After receiving a selection result of the calling user, the calling client includes the group identifier corresponding to the group in the third call request, and sends the third call request to a functional alias controlling server. Further, the calling user may select the call type as the group call by using the selection button on the human-computer interaction interface. After receiving the selection result of the calling user, the calling client includes the call type in the third call request, and sends the third call request to the functional alias controlling server.

The human-computer interaction interface in step 601 displays a plurality of groups (for example, a group 1 and a group 2), and each group corresponds to a selection button. Further, the human-computer interface may further display a plurality of call types, for example, an FA-based single call and a group call. Each call type corresponds to a selection button. For example, when determining that the calling user needs to call the group 1, the calling user may tap a selection button corresponding to the group 1 and tap a selection button corresponding to the group call. After receiving a selection result of the calling user, the calling client sends a call request including the group 1 and a call type of a group call.

Step 602: According to the invention, the group controlling server receives the third call request, and sends a first call request to the functional alias controlling server.

For example, after receiving the third call request, the group controlling server may perform an authorization check on the calling user based on the information that is about the calling user and that is included in the third call request, determine one or more FAs included in the group indicated by the group identifier after the check succeeds, include information about one or more FAs in the first call request, and send the first call request to the functional alias controlling server. The group controlling server prestores a correspondence between a group and FAs, and the group controlling server may determine, based on the correspondence, FAs included in the group indicated by the group identifier.

For example, assuming that a group 1 includes an FA 1, an FA 2, and an FA 3, when the group indicated by the group identifier included in the third call request is the group 1, the group controlling server determines that FAs included in the group 1 are the FA 1, the FA 2, and the FA 3, and sends the first call request including information about the FA 1, information about the FA 2, and information about the FA 3 to the functional alias controlling server.

For a manner in which the group controlling server performs the authorization check on the calling user, refer to the manner in which the functional alias controlling server performs the authorization check on the calling user. Details are not described again.

It should be noted that the first call request sent by the group controlling server to the functional alias controlling server may further include the group identifier, so that after receiving the first call request, the functional alias controlling server makes a call by using a group as a call granularity. The call type may also be included, and the call type may be an FA-based group call.

Step 603: The functional alias controlling server receives the first call request, and determines, based on information that is about an FA and that is included in the first call request, one or more activating users corresponding to the FA.

For step 603, refer to the descriptions of step 502. Details are not described again.

Step 604: According to the invention, the functional alias controlling server sends a second call request to a called client.

For step 604, refer to the descriptions of step 503. Details are not described again.

Step 605: The called client receives the second call request, and sends a response to the second call request to the functional alias controlling server.

For step 605, refer to the descriptions in step 504. Details are not described again.

Step 606: The functional alias controlling server receives the response to the second call request, where the response to the second call request is sent by the called client, and sends a response to the first call request to the group controlling server.

For related descriptions of the response to the first call request, refer to the descriptions in step 505. For a manner in which the functional alias controlling server sends the response to the first call request to the group controlling server, refer to the manner in which the functional alias controlling server sends the response to the first call request to the calling client. Details are not described again.

Step 607: The group controlling server receives the response to the second call request, and sends a response to the third call request to the calling client.

Content included in the response to the third call request is the same as content included in the response to the second call request, may include information about FAs corresponding to one or more activating users who are successfully called, and may further include information about the one or more activating users who are successfully called and other information, for example, identifiers of one or more called clients.

Step 608: The calling client receives the response to the third call request.

At this point, a media plane and a floor control plane between the calling client and the one or more called clients are set up, and floor control and media transmission may be performed.

Based on the call method shown in FIG. 6, the group controlling server may receive a group call from the calling client, determine one or more FAs included in the group, and send information about the one or more FAs to the functional alias controlling server. The functional alias controlling server receives a call request that is from the group controlling server and that includes the information about the one or more FAs, determines, based on the information about the one or more FAs, activating users corresponding to the one or more FAs, and sends the call request to all clients used by the activating users corresponding to the one or more FAs, to call the activating users. In this way, the plurality of users may be called based on the plurality of FAs. In addition, the functional alias controlling server directly determines the activating users corresponding to the one or more FAs and initiates the call, so that signaling overheads caused when the functional alias controlling server exchanges information with another network element to learn of the activating users corresponding to the FAs are avoided, and a call setup delay is reduced.

The foregoing mainly describes the solutions provided in the embodiments from a perspective of interaction between network elements. It may be understood that, to implement the foregoing functions, the network elements, for example, the functional alias controlling server, the group controlling server, and the client, include corresponding hardware structures and/or software modules for performing the functions. A person skilled in the art should easily be aware that, in combination with the examples described in the embodiments disclosed in this specification, algorithms steps may be implemented by hardware or a combination of hardware and computer software. Whether a function is performed by hardware or hardware driven by computer software depends on particular applications and design constraints of the technical solutions.

In the embodiments, the functional alias controlling server, the group controlling server, and the client may be divided into functional modules according to the foregoing method examples. For example, each functional module may be obtained through division for each function, or two or more functions may be integrated into one processing module. The integrated module may be implemented in a form of hardware, or may be implemented in a form of a software functional module. It should be noted that, in the embodiments, division into modules is an example, and is merely logical function division. During actual implementation, another division manner may be used.

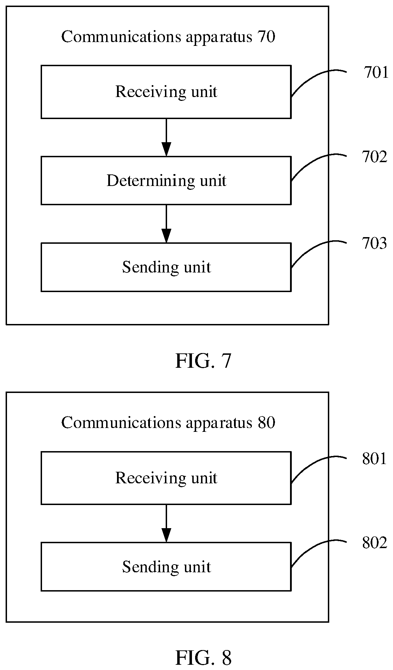

FIG. 7 is a schematic composition diagram of a communications apparatus 70 according to an embodiment. The communications apparatus 70 may be a functional alias controlling server, or a chip or a system-on-a-chip in the functional alias controlling server. As shown in FIG. 7, the communications apparatus 70 may include a receiving unit 701, a determining unit 702, and a sending unit 703.

The receiving unit 701 is configured to receive a first call request that includes information about an FA that a calling client requests to call. For example, the receiving unit 701 may be configured to support the functional alias controlling server in performing step 301, step 402, step 502, and step 603.

The determining unit 702 is configured to determine, based on the information about the FA, an activating user corresponding to the FA. For example, the determining unit 702 may be configured to support the functional alias controlling server in performing step 302, step 402, step 502, and step 603.

The sending unit 703 is configured to send a second call request to a client (which may be referred to as an alias client), to call the activating user corresponding to the FA, where the client is used by the activating user, and the second call request includes information about the activating user. For example, the sending unit 703 may be configured to support the functional alias controlling server in performing step 303, step 403, step 503, and step 604.

It should be noted that all related content of the steps in the foregoing method embodiments may be cited in function descriptions of corresponding functional modules. Details are not described herein again. The communications apparatus 70 provided in this embodiment is configured to perform functions of the functional alias controlling server in the call methods shown in FIG. 3 to FIG. 6, and therefore, can achieve an effect the same as that achieved by the foregoing call methods.

In another possible implementation, the communications apparatus 70 shown in FIG. 7 may include a processing module and a communications module. The processing module may integrate functions of the determining unit 702, and the communications module may integrate functions of the receiving unit 701 and the sending unit 703. The processing module is configured to control and manage an action of the communications apparatus 70. For example, the processing module is configured to support the communications apparatus 70 in performing step 302, step 402, step 502, step 603, and another process of the technology described in this specification. The communications module is configured to support the communications apparatus 70 in performing step 303, step 403, step 503, step 604, and communication with another network entity. Further, the communications apparatus 70 shown in FIG. 7 may further include a storage module, configured to store program code and data of the communications apparatus 70.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module may be a transceiver circuit, a communications interface, or the like. The storage module may be a memory. When the processing module is the processor, the communications module is the communications interface, and the storage module is the memory, the communications apparatus 70 shown in FIG. 7 may be the communications apparatus shown in FIG. 2.

FIG. 8 is a schematic composition diagram of a communications apparatus 80 according to an embodiment. The communications apparatus 80 may be a group controlling server, or a chip or a system-on-a-chip in the group controlling server. As shown in FIG. 8, the communications apparatus 80 may include a receiving unit 801 and a sending unit 802.

The receiving unit 801 is configured to receive a third call request from a calling client, where the third call request includes a group identifier, and a group indicated by the group identifier includes an FA. For example, the receiving unit 801 may be configured to support the group controlling server in performing step 602.

The sending unit 802 is configured to send a first call request to a functional alias controlling server, where the first call request includes information about the FA, to request to call a user corresponding to the FA. For example, the sending unit 802 may be configured to support the group controlling server in performing step 602.

It should be noted that all related content of the steps in the foregoing method embodiments may be cited in function descriptions of corresponding functional modules. Details are not described herein again. The communications apparatus 80 provided in this embodiment is configured to perform functions of the group controlling server in the call methods shown in FIG. 3 to FIG. 6, and therefore, can achieve an effect the same as that achieved by the foregoing call methods.

In a possible implementation, the communications apparatus 80 shown in FIG. 8 may include a processing module and a communications module. The communications module may integrate functions of the receiving unit 801 and the sending unit 802. The processing module is configured to control and manage an action of the communications apparatus 80. For example, the processing module is configured to support the communications apparatus 80 in performing another process of the technology described in this specification. The communications module is configured to support the communications apparatus 80 in performing step 602 and communication with another network entity. Further, the communications apparatus 80 shown in FIG. 8 may further include a storage module, configured to store program code and data of the communications apparatus 80.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module may be a transceiver circuit, a communications interface, or the like. The storage module may be a memory. When the processing module is the processor, the communications module is the communications interface, and the storage module is the memory, the communications apparatus 80 shown in FIG. 8 may be the communications apparatus shown in FIG. 2.

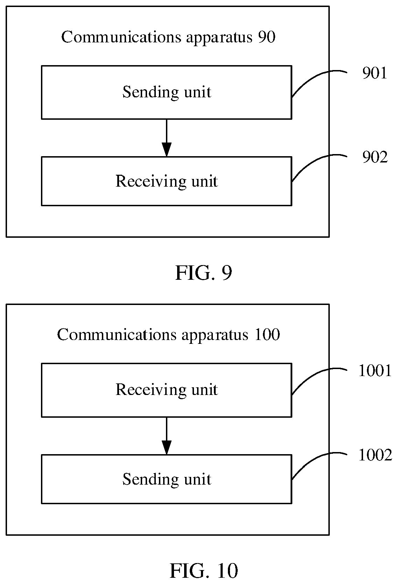

FIG. 9 is a schematic composition diagram of a communications apparatus 90 according to an embodiment. The communications apparatus 90 may be a calling client, or a chip or a system-on-a-chip in the calling client. As shown in FIG. 9, the communications apparatus 90 may include a sending unit 901 and a receiving unit 902.

In a possible design, the sending unit 901 is configured to send a first call request to a functional alias controlling server, where the first call request includes information about an FA that the calling client requests to call, to request to call a user corresponding to the FA. For example, the sending unit 901 is configured to support the calling client in performing step 401 and step 501.

The receiving unit 902 is configured to receive a response to the first call request from the functional alias controlling server, where the response to the first call request includes the information about the FA. For example, the receiving unit 902 may be configured to support the calling client in performing step 407 and step 507.

In another possible design, the sending unit 901 is configured to send a third call request to a group controlling server, where the third call request includes a group identifier, and a group indicated by the group identifier includes a functional alias FA. For example, the sending unit 901 is configured to support the calling client in performing step 601.

The receiving unit 902 is configured to receive a response to the third call request from the group controlling server, where the response to the third call request includes the information about the FA. For example, the sending unit 901 is configured to support the calling client in performing step 608.

It should be noted that all related content of the steps in the foregoing method embodiments may be cited in function descriptions of corresponding functional modules. Details are not described herein again. The communications apparatus 90 provided in this embodiment is configured to perform functions of the calling client in the call methods shown in FIG. 3 to FIG. 6, and therefore, can achieve an effect the same as that achieved by the foregoing call methods.

In another possible implementation, the communications apparatus 90 shown in FIG. 9 may include a processing module and a communications module. The communications module may integrate functions of the receiving unit 902 and the sending unit 901. The processing module is configured to control and manage an action of the communications apparatus 90. For example, the processing module is configured to support the communications apparatus 90 in performing another process of the technology described in this specification. The communications module is configured to support the communications apparatus 90 in performing step 401, step 501, step 407, step 507, and communication with another network entity. Further, the communications apparatus 90 shown in FIG. 9 may further include a storage module, configured to store program code and data of the communications apparatus 90.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module may be a transceiver circuit, a communications interface, or the like. The storage module may be a memory. When the processing module is the processor, the communications module is the communications interface, and the storage module is the memory, the communications apparatus 90 shown in FIG. 9 may be the communications apparatus shown in FIG. 2.

FIG. 10 is a schematic composition diagram of a communications apparatus 100 according to an embodiment. The communications apparatus 100 may be a called client, or a chip or a system-on-a-chip in the called client, or may be an SMF, or a chip or a system-on-a-chip in the SMF. As shown in FIG. 10, the communications apparatus 100 may include a receiving unit 1001 and a sending unit 1002.

The receiving unit 1001 is configured to receive a second call request a functional alias controlling server, where the second call request used to request to call an activating user corresponding to an FA, and the second call request includes information about the activating user and information about the FA. For example, the sending unit 1002 and the receiving unit 1001 are configured to support the called client in performing step 404, step 504, and step 604.

The sending unit 1002 is configured to send a response to the second call request to the functional alias controlling server, where the response to the second call request includes the information about the FA. For example, the sending unit 1002 is configured to support the called client in performing step 405, step 505, and step 605.

It should be noted that all related content of the steps in the foregoing method embodiments may be cited in function descriptions of corresponding functional modules. Details are not described herein again. The communications apparatus 100 provided in this embodiment is configured to perform functions of the called client in the call methods shown in FIG. 3 to FIG. 6, and therefore, can achieve an effect the same as that achieved by the foregoing call methods.

In a possible implementation, the communications apparatus 100 shown in FIG. 10 may include a processing module and a communications module. The communications module may integrate functions of the receiving unit 1001 and the sending unit 1002. The processing module is configured to control and manage an action of the communications apparatus 100. For example, the communications module is configured to support the communications apparatus 100 in performing step 405, step 505, step 605, and communication with another network entity. Further, the communications apparatus 100 shown in FIG. 10 may further include a storage module, configured to store program code and data of the communications apparatus 100.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module may be a transceiver circuit, a communications interface, or the like. The storage module may be a memory. When the processing module is the processor, the communications module is the communications interface, and the storage module is the memory, the communications apparatus 100 shown in FIG. 10 may be the communications apparatus shown in FIG. 2.

The foregoing descriptions about implementations allow a person skilled in the art to clearly understand that, for the purpose of convenient and brief description, division into only the foregoing functional modules is used as an example for description. In an actual application, the foregoing functions can be allocated to different functional modules for implementation based on a requirement. In other words, an inner structure of an apparatus is divided into different functional modules to implement all or some of the functions described above.

In the embodiments provided in this application, it should be understood that the disclosed apparatus and method may be implemented in other manners. For example, the described apparatus embodiments are merely examples. For example, division into the modules or units is merely logical function division. There may be another division manner during actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may be or may not be physically separate, and components displayed as units may be one or more physical units, that is, may be located in one place, or may be distributed on a plurality of different places. Some or all of the units may be selected based on actual requirements to achieve the objectives of the solutions in the embodiments.

In addition, the functional units in the embodiments may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments. The storage medium includes any medium that can store program code, for example, a USB flash drive, a removable hard disk, a ROM, a RAM, a magnetic disk, or an optical disc.

The foregoing descriptions are merely specific implementations, but are not intended to limit the protection scope. Any variation or replacement within the technical scope disclosed in this application shall fall within the protection scope. Therefore, the protection scope shall be subject to the protection scope of the claims.

## Claims

1. A call method in a mission critical service system comprising:
receiving (301, 401, 501, 601), by a functional alias controlling server, a first call request, wherein the first call request comprises information about a functional alias, FA, that a calling client requests to call, and the first call request is used to request to call a user corresponding to the FA;
determining (302, 402, 502, 602), by the functional alias controlling server based on the information about the FA, an activating user corresponding to the FA, wherein the activating user is a user who activates the FA; and
sending (303, 403, 503, 604), by the functional alias controlling server, a second call request to a called client, wherein the called client is a client used by the activating user, the second call request comprises information about the activating user, and the second call request is used to request to call the activating user.
wherein the receiving (301, 401, 501, 601), by a functional alias controlling server, a first call request comprises:
receiving (602), by the functional alias controlling server, the first call request from a group controlling server, wherein the first call request further comprises a group identifier, and a group indicated by the group identifier comprises the FA.

2. The method according to claim 1, wherein the method further comprises:
receiving (404, 504, 605), by the functional alias controlling server, a response to the second call request from the called client; and
sending (405, 505, 606, 607), by the functional alias controlling server, a response to the first call request based on the response to the second call request, wherein the response to the first call request comprises the information about the FA.

3. The method according to claim 1 or 2, wherein
the second call request further comprises the information about the FA; and
the response to the second call request comprises the information about the FA.

4. A call method in a mission critical service system comprising:
receiving (601), by a group controlling server, a third call request from a calling client, wherein the third call request comprises a group identifier, and a group indicated by the group identifier comprises a functional alias, FA; and
sending (602), by the group controlling server, a first call request to a functional alias controlling server, wherein the first call request comprises information about the FA, and the first call request is used to request to call a user corresponding to the FA.

5. The method according to claim 4, wherein the method further comprises:
receiving (606), by the group controlling server, a response to the first call request from the functional alias controlling server, wherein the response to the first call request comprises the information about the FA; and
sending (607), by the group controlling server, a response to the third call request to the calling client based on the response to the first call request, wherein the response to the third call request comprises the information about the FA.

6. The method according to claim 4 or 5, wherein the third call request further comprises a call type, and the call type is an FA-based group call.

7. A functional alias controlling server in a mission critical service system, comprising:
a memory (22) is configured to store instructions; and
a processor (21, 25) is configured to execute the instructions stored in the memory, to enable the communications apparatus to perform the call method according to any one of claims 1 to 3.

8. A group controlling server in a mission critical service system, comprising:
a memory (22) is configured to store instructions; and
a processor (21, 25) is configured to execute the instructions stored in the memory, to enable the communications apparatus to perform the call method according to any one of claims 4 to 6.

9. A computer-readable storage medium stores instructions, when the instructions are run on a computer of a functional alias controlling server, the computer is enabled to perform the call method according to any one of claims 1 to 3.

10. A computer-readable storage medium stores instructions, when the instructions are run on a computer of a group controlling server, the computer is enabled to perform the call method according to any one of claims 4 to 6.

## Patentansprüche

1. Anrufverfahren in einem missionskritischen Dienstsystem, umfassend:
Empfangen (301, 401, 501, 601) einer ersten Anrufanforderung durch einen Funktional-Alias-Steuerungsserver, wobei die erste Anrufanforderung Informationen über einen Funktional-Alias FA umfasst, den ein anrufender Client anzurufen anfordert, und die erste Anrufanforderung verwendet wird, um anzufordern, einen dem FA entsprechenden Benutzer anzurufen;
Bestimmen (302, 402, 502, 602) eines dem FA entsprechenden aktivierenden Benutzers durch den Funktional-Alias-Steuerungsserver auf der Basis der Informationen über den FA, wobei der aktivierende Benutzer ein Benutzer ist, der den FA aktiviert; und
Senden (303, 403, 503, 604) einer zweiten Anrufanforderung zu einem angerufenen Client durch den Funktional-Alias-Steuerungsserver, wobei der angerufene Client ein durch den aktivierenden Benutzer verwendeter Client ist, die zweite Anrufanforderung Informationen über den aktivierenden Benutzer umfasst und die zweite Anrufanforderung verwendet wird, um anzufordern, den aktivierenden Benutzer anzurufen,
wobei das Empfangen (301, 401, 501, 601) einer ersten Anrufanforderung durch einen Funktional-Alias-Steuerungsserver Folgendes umfasst:
Empfangen (602) der ersten Anrufanforderung durch den Funktional-Alias-Steuerungsserver von einem Gruppensteuerungsserver, wobei die erste Anrufanforderung ferner eine Gruppenkennung umfasst und eine durch die Gruppenkennung angegebene Gruppe den FA umfasst.

2. Verfahren nach Anspruch 1, wobei das Verfahren ferner Folgendes umfasst:
Empfangen (404, 504, 605) einer Antwort auf die zweite Anrufanforderung durch den Funktional-Alias-Steuerungsserver von dem angerufenen Client; und
Senden (405, 505, 606, 607) einer Antwort auf die erste Anrufanforderung durch den Funktional-Alias-Steuerungsserver auf der Basis der Antwort auf die zweite Anrufanforderung, wobei die Antwort auf die erste Anrufanforderung die Informationen über den FA umfasst.

3. Verfahren nach Anspruch 1 oder 2, wobei
die zweite Anrufanforderung ferner die Informationen über den FA umfasst; und
die Antwort auf die zweite Anrufanforderung die Informationen über den FA umfasst.

4. Anrufverfahren in einem missionskritischen Dienstsystem, umfassend:
Empfangen (601) einer dritten Anrufanforderung durch einen Gruppensteuerungsserver von einem anrufenden Client, wobei die dritte Anrufanforderung eine Gruppenkennung umfasst und eine durch die Gruppenkennung angegebene Gruppe einen Funktional-Alias FA umfasst; und
Senden (602) einer ersten Anrufanforderung zu einem Funktional-Alias-Steuerungsserver durch den Gruppensteuerungsserver, wobei die erste Anrufanforderung Informationen über den FA umfasst und die erste Anrufanforderung verwendet wird, um anzufordern, einen dem FA entsprechenden Benutzer anzurufen.

5. Verfahren nach Anspruch 4, wobei das Verfahren ferner Folgendes umfasst:
Empfangen (606) einer Antwort auf die erste Anrufanforderung durch den Gruppensteuerungsserver von dem Funktional-Alias-Steuerungsserver, wobei die Antwort auf die erste Anrufanforderung die Informationen über den FA umfasst; und
Senden (607) einer Antwort auf die dritte Anrufanforderung durch den Gruppensteuerungsserver zu dem anrufenden Client auf der Basis der Antwort auf die erste Anrufanforderung, wobei die Antwort auf die dritte Anrufanforderung die Informationen über den FA umfasst.

6. Verfahren nach Anspruch 4 oder 5, wobei die dritte Anrufanforderung ferner einen Anruftyp umfasst und der Anruftyp ein Gruppenanruf auf FA-Basis ist.

7. Funktional-Alias-Steuerungsserver in einem missionskritischen Dienstsystem, umfassend:
einen Speicher (22), ausgelegt zum Speichern von Anweisungen; und
einen Prozessor (21; 25), ausgelegt zum Ausführen der in dem Speicher gespeicherten Anweisungen, um der Kommunikationsvorrichtung zu ermöglichen, das Anrufverfahren nach einem der Ansprüche 1 bis 3 auszuführen.

8. Gruppensteuerungsserver in einem missionskritischen Dienstsystem, umfassend:
einen Speicher (22), ausgelegt zum Speichern von Anweisungen; und
einen Prozessor (21, 25), ausgelegt zum Ausführen der in dem Speicher gespeicherten Anweisungen, um es der Kommunikationsvorrichtung zu ermöglichen, das Anrufverfahren nach einem der Ansprüche 4 bis 6 auszuführen.

9. Computerlesbares Speicherungsmedium, das Anweisungen speichert, wobei, wenn die Anweisungen auf einem Computer eines Funktional-Alias-Steuerungsservers laufengelassen werden, der Computer dazu befähigt wird, das Anrufverfahren nach einem der Ansprüche 1 bis 3 auszuführen.

10. Computerlesbares Speicherungsmedium, das Anweisungen speichert, wobei, wenn die Anweisungen auf einem Computer eines Gruppensteuerungsservers laufengelassen werden, der Computer dazu befähigt wird, das Anrufverfahren nach einem der Ansprüche 4 bis 6 auszuführen.

## Revendications

1. Procédé d'appel dans un système de service critique comprenant :
la réception (301, 401, 501, 601), par un serveur de commande d'alias fonctionnel, d'une première demande d'appel, dans lequel la première demande d'appel comprend des informations sur un alias fonctionnel, FA, qu'un client appelant demande à appeler, et la première demande d'appel est utilisée pour demander d'appeler un utilisateur correspondant au FA ;
la détermination (302, 402, 502, 602), par le serveur de commande d'alias fonctionnel sur la base des informations sur le FA, d'un utilisateur activateur correspondant au FA, dans lequel l'utilisateur activateur est un utilisateur qui active le FA ; et
l'envoi (303, 403, 503, 604), par le serveur de commande d'alias fonctionnel, d'une deuxième demande d'appel à un client appelé, dans lequel le client appelé est un client utilisé par l'utilisateur activateur, la deuxième demande d'appel comprend des informations sur l'utilisateur activateur, et la deuxième demande d'appel est utilisée pour demander d'appeler l'utilisateur activateur ;
dans lequel la réception (301, 401, 501, 601), par un serveur de commande d'alias fonctionnel, d'une première demande d'appel comprend :
la réception (602), par le serveur de commande d'alias fonctionnel, de la première demande d'appel à partir d'un serveur de commande de groupe, dans lequel la première demande d'appel comprend en outre un identificateur de groupe, et un groupe indiqué par l'identificateur de groupe comprend le FA.

2. Procédé selon la revendication 1, le procédé comprenant en outre :
la réception (404, 504, 605), par le serveur de commande d'alias fonctionnel, d'une réponse à la deuxième demande d'appel à partir du client appelé ; et
l'envoi (405, 505, 606, 607), par le serveur de commande d'alias fonctionnel, d'une réponse à la première demande d'appel sur la base de la réponse à la deuxième demande d'appel, dans lequel la réponse à la première demande d'appel comprend les informations sur le FA.

3. Procédé selon la revendication 1 ou 2, dans lequel
la deuxième demande d'appel comprend en outre les informations sur le FA ; et
la réponse à la deuxième demande d'appel comprend les informations sur le FA.

4. Procédé d'appel dans un système de service critique comprenant :
la réception (601), par un serveur de commande de groupe, d'une troisième demande d'appel à partir d'un client appelant, dans lequel la troisième demande d'appel comprend un identificateur de groupe, et un groupe indiqué par l'identificateur de groupe comprend un alias fonctionnel, FA ; et
l'envoi (602), par le serveur de commande de groupe, d'une première demande d'appel à un serveur de commande d'alias fonctionnel, dans lequel la première demande d'appel comprend des informations sur le FA, et la première demande d'appel est utilisée pour demander d'appeler un utilisateur correspondant au FA.

5. Procédé selon la revendication 4, le procédé comprenant en outre :
la réception (606), par le serveur de commande de groupe, d'une réponse à la première demande d'appel à partir du serveur de commande d'alias fonctionnel, dans lequel la réponse à la première demande d'appel comprend les informations sur le FA ; et
l'envoi (607), par le serveur de commande de groupe, d'une réponse à la troisième demande d'appel au client appelant sur la base de la réponse à la première demande d'appel, dans lequel la réponse à la troisième demande d'appel comprend les informations sur le FA.

6. Procédé selon la revendication 4 ou 5, dans lequel la troisième demande d'appel comprend en outre un type d'appel, et le type d'appel est un appel de groupe basé sur le FA.

7. Serveur de commande d'alias fonctionnel dans un système de service critique, comprenant :
une mémoire (22) configurée pour stocker des instructions ; et
un processeur (21, 25) configuré pour exécuter les instructions stockées dans la mémoire, pour permettre à l'appareil de communication d'exécuter le procédé d'appel selon l'une quelconque des revendications 1 à 3.

8. Serveur de commande de groupe dans un système de service critique, comprenant :
une mémoire (22) configurée pour stocker des instructions ; et
un processeur (21, 25) configuré pour exécuter les instructions stockées dans la mémoire, pour permettre à l'appareil de communication d'exécuter le procédé d'appel selon l'une quelconque des revendications 4 à 6.

9. Support de stockage lisible par ordinateur stockant des instructions, lorsque les instructions sont exécutées sur un ordinateur d'un serveur de commande d'alias fonctionnel, l'ordinateur est activé pour exécuter le procédé d'appel selon l'une quelconque des revendications 1 à 3.

10. Support de stockage lisible par ordinateur stockant des instructions, lorsque les instructions sont exécutées sur un ordinateur d'un serveur de commande de groupe, l'ordinateur est activé pour exécuter le procédé d'appel selon l'une quelconque des revendications 4 à 6.
